# EUROPEAN PATENT APPLICATION

(11) **EP 4 793 315 A1**
(43) Date of publication of application: **19.08.2026**
(21) Application number: 24877545.4
(22) Date of filing: 11.10.2024
(51) Int. Cl.: C08L 25/12, C08L 55/02, C08L 33/08

(54) **THERMOPLASTIC RESIN COMPOSITION AND PREPARATION METHOD THEREFOR**

(30) Priority: 13.10.2023 KR 20230137075
(71) Applicant: LG Chem, Ltd., Seoul 07336 (KR)
(72) Inventor: KIM, Seong Kyun, Daejeon 34122 (KR); KIM, Seo Hwa, Daejeon 34122 (KR); HWANG, Moon Ja, Daejeon 34122 (KR); CHOI, Eun Jung, Daejeon 34122 (KR); HAN, Se Jin, Daejeon 34122 (KR); KIM, Yeong Min, Daejeon 34122 (KR); BAE, Sung Ho, Daejeon 34122 (KR)
(74) Representative: Goddar, Heinz J.
(86) International application number: PCT/KR2024/015388
(87) International publication number: WO 2025/080010

(57) **Abstract**

A thermoplastic resin composition according to an embodiment of the present invention may include a base resin including a recycled resin, a virgin diene-based graft polymer, and a virgin vinyl-based non-graft polymer, and an additive, and satisfy Mathematical Equation 1 below. $0.011 \leq \frac{A + B}{C} \leq 0.032$

In Mathematical Equation 1 above,
A indicates an area (integration) of a peak observed in a range of 3.95 ppm to 4.15 ppm in ¹H-NMR of the thermoplastic resin composition,
B indicates an area (integration) of a peak observed in a range of 0.91 ppm to 1.03 ppm in ¹H-NMR of the thermoplastic resin composition, and
C indicates an area (integration) of a peak observed in a range of 6.4 ppm to 7.5 ppm in ¹H-NMR of the thermoplastic resin composition.

## Description

### TECHNICAL FIELD

### Cross-reference to Related Applications

This application claims the benefit of Korean Patent Application No. 2023-0137075, filed on October 13, 2023, in the Korean Intellectual Property Office, the disclosure of which is incorporated herein in its entirety by reference.

### Technical Field

The present invention relates to a thermoplastic resin composition and a method for preparing the same.

### BACKGROUND ART

A diene-based graft polymer includes a diene-based rubber polymer and a shell including a vinyl aromatic monomer unit and a vinyl cyanide-based monomer unit grafted onto the diene-based rubber polymer. The diene-based graft polymer is superior to typical high impact polystyrene (HIPS) in impact resistance, chemical resistance, thermal stability, colorability, fatigue resistance, rigidity, and processability. These properties allow molded articles made from thermoplastic resin compositions including the diene-based graft polymer to be used as automotive interior and exterior materials, office equipment, parts for various electrical and electronic products, food containers, cosmetic containers, or pharmaceutical containers.

Recently, with a growing interest in sustainable development, research has been conducted on using recycled resins derived by recycling resin waste as raw materials for thermoplastic resin compositions. However, the recycled resins contain various impurities including foreign matter, thereby causing degradation in impact strength when used as raw materials for thermoplastic resin compositions. In addition, the recycled resins are primarily provided in pellet form through extrusion processing, which leads to a significant deviation in physical properties over the time point of production compared to virgin resins in powder form.

Accordingly, there is a need for a thermoplastic resin composition that provides improved impact resistance even in the use of recycled resins as raw materials and reduced property deviations in production.

### DISCLOSURE OF THE INVENTION

### TECHNICAL PROBLEM

An aspect of the present invention provides a thermoplastic resin composition exhibiting both excellent impact resistance and processability and minimized property deviations over the time point of production, even in the inclusion of a recycled resin as a component, and a method for preparing the same.

### TECHNICAL SOLUTION

(1) According to an aspect of the present invention, provided is a thermoplastic resin composition including a base resin that includes a recycled resin, a virgin diene-based graft polymer, and a virgin vinyl-based non-graft polymer, and an additive, and satisfying Mathematical Equation 1 below.

   $0.011 \leq \frac{A + B}{C} \leq 0.032$
   In Mathematical Equation 1 above, A indicates an area (integration) of a peak observed in a range of 3.95 ppm to 4.15 ppm in ¹H-NMR of the thermoplastic resin composition, B indicates an area (integration) of a peak observed in a range of 0.91 ppm to 1.03 ppm in ¹H-NMR of the thermoplastic resin composition, and C indicates an area (integration) of a peak observed in a range of 6.4 ppm to 7.5 ppm in ¹H-NMR of the thermoplastic resin composition.
(2) The present invention provides the thermoplastic resin composition according to (1) above, wherein the additive is an acrylate-based non-graft polymer.
(3) The present invention provides the thermoplastic resin composition according to (1) or (2) above, wherein the acrylate-based non-graft polymer has a weight average molecular weight of 1,000 g/mol to 5,000 g/mol.
(4) The present invention provides the thermoplastic resin composition according to any one of (1) to (3) above, wherein the acrylate-based non-graft polymer is an acrylate-based homopolymer.
(5) The present invention provides the thermoplastic resin composition according to any one of (1) to (4) above, wherein the acrylate-based non-graft polymer includes at least one of polymethyl acrylate, polyethyl acrylate, and polybutyl acrylate.
(6) The present invention provides the thermoplastic resin composition according to any one of (1) to (5) above, wherein with respect to 100 parts by weight of the base resin, the acrylate-based non-graft polymer is provided in an amount of 0.10 parts by weight to 1.00 part by weight.
(7) The present invention provides the thermoplastic resin composition according to any one of (1) to (6) above, wherein the recycled resin includes at least one selected from the group consisting of recycled polyethylene, recycled polypropylene, recycled polyester, recycled polystyrene, recycled polyamide, recycled polycarbonate, recycled diene-based graft polymer, and recycled vinyl-based non-graft polymer.
(8) The present invention provides the thermoplastic resin composition according to any one of (1) to (7) above, wherein the virgin diene-based graft polymer includes a diene-based rubber polymer, and a shell including a vinyl cyanide-based monomer unit and a vinyl aromatic monomer unit grafted onto the diene-based rubber polymer.
(9) The present invention provides the thermoplastic resin composition according to any one of (1) to (8) above, wherein the virgin vinyl-based non-graft polymer includes a vinyl cyanide-based monomer unit and a vinyl aromatic monomer unit.
(10) The present invention provides the thermoplastic resin composition according to any one of (1) to (9) above, wherein with respect to 100 parts by weight of the base resin, the recycled resin is provided in an amount of 10 parts by weight to 95 parts by weight, the virgin diene-based graft polymer is provided in an amount of 5 parts by weight to 30 parts by weight, and the virgin vinyl-based non-graft polymer is provided in an amount of 1 part by weight to 60 parts by weight.

### ADVANTAGEOUS EFFECTS

A thermoplastic resin composition according to the present invention may exhibit both excellent impact resistance and processability and minimized property deviations over the time point of production, even in the inclusion of a recycled resin as a component.

### MODE FOR CARRYING OUT THE INVENTION

Hereinafter, the present invention will be described in detail to aid in understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, an average particle diameter may be measured using a dynamic light scattering method, and more specifically, may indicate an arithmetic average particle diameter, that is, a scattering intensity (intensity distribution) average particle diameter, in particle size distribution measured by the dynamic light scattering method. In addition, in the present invention, an average particle diameter may be measured using Nicomp 380 equipment from Particle Sizing Systems.

In the present invention, a weight average molecular weight of a vinyl-based polymer may be measured as a relative value with respect to a standard polystyrene sample by using tetrahydrofuran as an eluent and using gel permeation chromatography.

In the present invention, a weight average molecular weight of a compound may be measured as a relative value with respect to a standard polystyrene sample by using tetrahydrofuran as an eluent and using gel permeation chromatography.

In the present invention, a diene-based monomer may be at least one selected from the group consisting of 1,3-butadiene, isoprene, chloroprene, and piperylene, and particularly, 1,3-butadiene is preferred.

In the present invention, a (meth)acrylate monomer may be a term encompassing both an acrylate-based monomer and a methacrylate-based monomer. The (meth)acrylate-based monomer may be a C₁ to C₁₀ alkyl (meth)acrylate-based monomer, and may be at least one selected from the group consisting of methyl (meth)acrylate, ethyl (meth)acrylate, propyl (meth)acrylate, butyl (meth)acrylate, heptyl (meth)acrylate, hexyl (meth)acrylate, 2-ethylhexyl (meth)acrylate, and decyl (meth)acrylate, and particularly, butyl acrylate is preferred.

In the present invention, a vinyl aromatic monomer may be at least one selected from the group consisting of styrene, α-methyl styrene, α-ethyl styrene, and p-methyl styrene, and particularly, styrene is preferred.

In the present invention, a vinyl cyanide-based monomer may be at least one selected from the group consisting of acrylonitrile, methacrylonitrile, phenylacrylonitrile, and α-chloroacrylonitrile, and particularly, acrylonitrile is preferred.

### <Thermoplastic resin composition>

The thermoplastic resin composition of present invention at least includes a base resin including a recycled resin, a virgin diene-based graft polymer, and a virgin vinyl-based non-graft polymer, and an additive, and satisfies Mathematical Equation 1 below.$0.011 \leq \frac{A + B}{C} \leq 0.032$

In Mathematical Equation 1 above,
A indicates an area (integration) of a peak observed in a range of 3.95 ppm to 4.15 ppm in ¹H-NMR of the thermoplastic resin composition, B indicates an area (integration) of a peak observed in a range of 0.91 ppm to 1.03 ppm in ¹H-NMR of the thermoplastic resin composition, and C indicates an area (integration) of a peak observed in a range of 6.4 ppm to 7.5 ppm in ¹H-NMR of the thermoplastic resin composition.

The inventors of the present invention have found that, in a thermoplastic resin including a recycled resin, regulating a ratio of an area C of a third peak observed in a range of 6.4 ppm to 7.5 ppm to a sum of an area A of the first peak observed in a range of 3.95 ppm to 4.15 ppm and an area B of a second peak observed in a range of 0.91 ppm to 1.03 ppm in ¹H-NMR measurements leads to both no degradation in impact resistance of the thermoplastic resin composition and minimized property deviations over the time point of production, and have thus completed the present invention.

According to an embodiment of the present invention, the first peak observed in ¹H-NMR measurements, which is a peak expressed by -COOCH₂ hydrogens of -COOCH₂RCH₃ groups (R is an alkylene group having 2 to 20 carbon atoms) bonded to an acyclic aliphatic polymer chain main chain in a thermoplastic resin composition, may be observed in a range of 3.95 ppm to 4.15 ppm, and for specific examples, may be observed in a range of 3.96 ppm or greater, 3.97 ppm or greater, 3.98 ppm or greater, 3.99 ppm or greater, or 4.00 ppm or greater, and may also be observed in a range of 4.14 ppm or less, 4.13 ppm or less, 4.12 ppm or less, 4.11 ppm or less, or 4.10 ppm or less.

According to an embodiment of the present invention, the second peak, which is a peak expressed by -CH₃ hydrogens of -COOCH₂RCH₃ groups (R is an alkylene group having 2 to 20 carbon atoms) bonded to an acyclic aliphatic polymer chain main chain, may be observed in a range of 0.91 ppm to 1.03 ppm, and for specific examples, may be observed in a range of 0.912 ppm or greater, 0.914 ppm or greater, 0.916 ppm or greater, 0.918 ppm or greater, or 0.920 ppm or greater, and may also be observed in a range of 1.02 ppm or less, 1.01 ppm or less, 1.00 ppm or less, 0.99 ppm or less, or 0.98 ppm or less.

According to an embodiment of the present invention, the area of the first peak and the area of the second peak may be proportional to the content of an additive including - COOCH₂RCH₃ groups (R is an alkylene group having 2 to 20 carbon atoms) bonded to an acyclic aliphatic polymer chain main chain. The additive includes -COOCH₂RCH₃ groups (R is an alkylene group having 2 to 20 carbon atoms) bonded to an acyclic aliphatic polymer chain main chain and uniformly mixes a recycled resin and a virgin vinyl-based non-graft polymer in pellet form, and a virgin diene-based graft polymer in powder form, and may thus minimize property deviations over the time point of production in a thermoplastic resin composition.

According to an embodiment of the present invention, the third peak, which is a peak expressed by hydrogens bonded to styrene, may be observed in a range of 6.4 ppm to 7.5 ppm, and for specific examples, may be observed in a range of 6.42 ppm or greater, 6.44 ppm or greater, 6.46 ppm or greater, 6.48 ppm or greater, or 6.5 ppm or greater, and may also be observed in a range of 7.48 ppm or less, 7.46 ppm or less, 7.44 ppm or less, 7.42 ppm or less, or 7.4 ppm or less. The area of the third peak may be proportional to the content of a base resin included in the thermoplastic resin.

Consequently, according to an embodiment of the present invention, a ratio of the area of the third peak to the sum of the area of the first peak and the area of the second peak ((A+B)/C) in ¹H-NMR measurements may indicate a ratio of the content of an additive including -COOCH₂RCH₃ groups (R is an alkylene group having 1 to 20 carbon atoms) bonded to an acyclic aliphatic polymer chain main chain to the content of a base resin included in the thermoplastic resin.

According to an embodiment of the present invention, the ratio of the area of the third peak to the sum of the area of the first peak and the area of the second peak ((A+B)/C) in ¹H-NMR measurements may be 0.011 to 0.03, and for specific examples, may be 0.01105 or greater, 0.0111 or greater, 0.01115 or greater, or 0.0112 or greater, and may also be 0.028 or less, 0.026 or less, 0.024 or less, 0.022 or less, or 0.02 or less. When the above ranges are satisfied, both no degradation in impact resistance of the thermoplastic resin composition and minimized property deviations over the time point of production may be achieved. When the ratio of the area of the third peak to the sum of the area of the first peak and the area of the second peak ((A+B)/C) is less than the above range, the additive is significantly less than the base resin in content, and thus the recycled resin and the virgin vinyl-based non-graft polymer in pellet form, and the virgin diene-based graft polymer in powder form may not be uniformly mixed, leading to property deviations over the time point of production in the thermoplastic resin composition. In addition, when the ratio of the area of the third peak to the sum of the area of the first peak and the area of the second peak ((A+B)/C) is greater than the above range, the additive is significantly greater than the base resin in content, and thus the recycled resin and the virgin vinyl-based non-graft polymer in pellet form, and the virgin diene-based graft polymer in powder form may agglomerate, leading to greater property deviations over the time point of production in the thermoplastic resin composition.

Hereinafter, the constituent elements of the thermoplastic resin composition according to an embodiment of the present invention will be described in detail.

### 1. Base resin

### (1) Recycled resin

According to an embodiment of the present invention, a recycled resin is a component included in a thermoplastic resin composition to obtain eco-friendly product certification, and is a recycled product reused after processing used resin or resin waste. Specifically, the recycled resin may indicate a product reused after resin waste is collected, crushed, washed, separated and sorted, and then processed for a specific purpose. The form of the recycled resin is not particularly limited.

According to an embodiment of the present invention, the recycled resin may include at least one of recycled polyethylene, recycled polypropylene, recycled polyester, recycled polystyrene, recycled polyamide, recycled polycarbonate, recycled diene-based graft polymer, and recycled vinyl-based non-graft polymer.

According to an embodiment of the present invention, the recycled resin may include a diene-based rubber polymer, a vinyl cyanide-based monomer unit, and a vinyl aromatic monomer unit. The diene-based rubber polymer may enhance the impact resistance of the recycled resin. The vinyl cyanide-based monomer unit may enhance the chemical resistance of the recycled resin. In addition, the vinyl aromatic monomer unit may enhance the processability of the recycled resin.

Meanwhile, according to an embodiment of the present invention, the recycled resin may include a diene-based rubber polymer in an amount of 10.0 wt% to 30.0 wt%, preferably 10.0 wt% to 20.0 wt%. When the conditions described above are satisfied, the impact resistance of the recycled resin may be further enhanced.

According to an embodiment of the present invention, the recycled resin may include a vinyl cyanide-based monomer unit in an amount of 15.0 wt% to 30.0 wt%, preferably 18.0 wt% to 24.0 wt%. When the conditions described above are satisfied, the chemical resistance of the recycled resin may be further enhanced.

According to an embodiment of the present invention, the recycled resin may include a residual amount of vinyl aromatic monomer units, making up a total weight of 100%.

According to an embodiment of the present invention, the thermoplastic resin composition may include the recycled resin in an amount of 10 parts by weight to 95 parts by weight with respect to 100 parts by weight of the base resin, and for specific examples, may include the recycled resin in an amount of 12 parts by weight or greater, 14 parts by weight or greater, 16 parts by weight or greater, 18 parts by weight or greater, or 20 parts by weight or greater, and further may include the recycled resin in an amount of 94 parts by weight or less, 93 parts by weight or less, 92 parts by weight or less, 91 parts by weight or less, or 90 parts by weight or less. When the above ranges are satisfied, both carbon reduction and a satisfactory level of physical properties may be achieved.

### (2) Virgin diene-based graft polymer

According to an embodiment of the present invention, a virgin diene-based graft polymer is a diene-based graft polymer that has never been used before and is a component capable of enhancing the impact resistance of a thermoplastic resin composition.

According to an embodiment of the present invention, the virgin diene-based graft polymer may be a graft polymer including a diene-based rubber polymer, and a shell including a vinyl aromatic monomer unit and a vinyl cyanide-based monomer unit grafted onto the diene-based rubber polymer. The shell may include a vinyl aromatic monomer unit and a vinyl cyanide-based monomer unit that are not grafted onto the diene-based rubber polymer.

According to an embodiment of the present invention, the diene-based rubber polymer may be prepared by crosslinking a diene monomer, and may have an average particle size of 50 to 600 nm, preferably 150 to 450 nm. When the conditions described above are satisfied, the impact resistance of the virgin diene-based graft polymer may be enhanced.

According to an embodiment of the present invention, the virgin diene-based graft polymer may include the diene-based rubber polymer in an amount of 40.0 wt% to 80.0 wt%, preferably 50.0 wt% to 70.0 wt%. When the conditions described above are satisfied, the impact resistance of the virgin diene-based graft polymer may be further enhanced.

According to an embodiment of the present invention, the virgin diene-based graft polymer may include the vinyl aromatic monomer unit in an amount of 10.0 wt% to 50.0 wt%, preferably 20.0 wt% to 40.0 wt%. When the conditions described above are satisfied, the processability of the virgin diene-based graft polymer may be further enhanced.

According to an embodiment of the present invention, the virgin diene-based graft polymer may include the vinyl cyanide-based monomer unit in an amount of 1.0 wt% to 30.0 wt%, preferably 5.0 wt% to 25.0 wt%. When the conditions described above are satisfied, the chemical resistance of the virgin diene-based graft polymer may be further enhanced.

According to an embodiment of the present invention, the thermoplastic resin composition may include the virgin diene-based graft polymer in an amount of 5 parts by weight to 30 parts by weight with respect to 100 parts by weight of the base resin, and for specific examples, may include the virgin diene-based graft polymer in an amount of 6 parts by weight or greater, 7 parts by weight or greater, 8 parts by weight or greater, 9 parts by weight or greater, 10 parts by weight or greater, or 11 parts by weight or greater, and further may include the virgin diene-based graft polymer in an amount of 29.5 parts by weight or less, 29 parts by weight or less, 28.5 parts by weight or less, or 28 parts by weight or less. When the above ranges are satisfied, the impact resistance of a thermoplastic resin composition may be further enhanced.

### (3) Virgin vinyl-based non-graft polymer

According to an embodiment of the present invention, a virgin vinyl-based non-graft polymer may serve to enhance the processability of a thermoplastic resin composition.

According to an embodiment of the present invention, the virgin vinyl-based non-graft polymer may include the vinyl aromatic monomer unit and the vinyl cyanide-based monomer unit in a weight ratio of 90:10 to 60:40, preferably 85:15 to 65:35. When the conditions described above are satisfied, a virgin vinyl-based non-graft polymer having enhanced processability and chemical resistance may be prepared.

According to an embodiment of the present invention, the thermoplastic resin composition may include the virgin vinyl-based non-graft polymer in an amount of 1 parts by weight to 60 parts by weight with respect to 100 parts by weight of the base resin, and for specific examples, may include the virgin vinyl-based non-graft polymer in an amount of 2 parts by weight or greater, 4 parts by weight or greater, 6 parts by weight or greater, 8 parts by weight or greater, or 10 parts by weight or greater, and further may include the virgin vinyl-based non-graft polymer in an amount of 58 parts by weight or less, 56 parts by weight or less, 54 parts by weight or less, 52 parts by weight or less, or 50 parts by weight or less.

### 2. Additive

According to an embodiment of the present invention, an additive includes -COOCH₂RCH₃ groups (R is an alkylene group having 2 to 20 carbon atoms) bonded to an acyclic aliphatic polymer chain main chain, and may serve to minimize property deviations over the time point of production in a thermoplastic resin composition due to a recycled resin and to enhance processability. In general, a recycled resin and a virgin vinyl-based non-graft polymer are in pellet form, and a virgin diene-based graft polymer is in powder form, and thus uniformly mixing the three may be hardly achievable. However, the additive enables the three to be mixed uniformly, and accordingly, minimizing property deviations over the time point of production in a thermoplastic resin composition due to the recycled resin and enhancing processability may be achieved.

According to an embodiment of the present invention, the additive may be an acrylate-based non-graft polymer. The acrylate-based non-graft polymer may have a weight average molecular weight of 1,000 to 5,000 g/mol, preferably 1,200 to 4,000 g/mol. When the conditions described above are satisfied, property deviations over the time point of thermoplastic resin composition production may be minimized.

According to an embodiment of the present invention, the acrylate-based non-graft polymer may include an acrylate-based homopolymer, and specifically may include at least one selected from the group consisting of polypropyl acrylate, polybutylacrylate, polypentylacrylate, polyhexylacrylate, polyheptylacrylate, and polyoctylacrylate.

According to an embodiment of the present invention, the thermoplastic resin composition may include the additive in an amount sufficient to satisfy Mathematical Equation 1 above. When the conditions described above are satisfied, property deviations over the time point of production may be minimized with no degradation in impact resistance of the thermoplastic resin composition.

According to an embodiment of the present invention, the additive may further include an olefin-based non-graft polymer. The olefin-based non-graft polymer may serve to enhance the impact resistance of a thermoplastic resin composition through synergy with a recycled resin.

According to an embodiment of the present invention, the olefin-based non-graft polymer may include an olefin-based monomer unit, and at least one of a vinyl acetate monomer unit and a (meth)acrylate-based monomer unit to enhance appearance properties of a thermoplastic resin composition.

According to an embodiment of the present invention, the olefin-based non-graft polymer may include the olefin-based monomer unit in an amount of 68.0 to 80.0 wt%, preferably 70.0 to 78.0 wt%, and more preferably 71.0 to 76.0 wt%. The olefin-based non-graft polymer may include at least one selected from the group consisting of a vinyl acetate monomer unit and a (meth)acrylate-based monomer unit, in an amount of 20.0 to 32.0 wt%, preferably 22.0 to 30.0 wt%, and more preferably 24.0 to 29.0 wt%. When the conditions described above are satisfied, the appearance properties of the thermoplastic resin composition may be further enhanced.

According to an embodiment of the present invention, the olefin-based non-graft polymer may include at least one of ethylene/vinyl acetate polymer, ethylene/methyl methacrylate polymer, ethylene/ethyl methacrylate, and ethylene/butyl methacrylate polymer.

According to an embodiment of the present invention, the thermoplastic resin composition may include the olefin-based non-graft polymer in an amount of 1.00 part by weight to 5.00 parts by weight, preferably 1.00 part by weight to 4.00 parts by weight, with respect to 100 parts by weight of the base resin. When the conditions described above are satisfied, it may be evenly dispersed in the thermoplastic resin composition, the thermoplastic resin composition may have enhanced impact resistance and may be prevented from delamination.

### 2. Method for preparing thermoplastic resin composition

A method for preparing a thermoplastic resin composition according to an embodiment of the present invention includes mixing a base resin containing a recycled resin, a virgin diene-based graft polymer, and a virgin non-graft polymer, and an additive containing -COOCH₂RCH₃ groups (R is an alkylene group having 2 to 20 carbon atoms) bonded to an acyclic aliphatic polymer chain main chain.

According to an embodiment of the present invention, the additive may be an acrylate-based non-graft polymer in a liquid state. As described above, in general, the recycled resin and the virgin vinyl-based non-graft polymer are in pellet form and the virgin diene-based graft polymer is in powder form, and accordingly, uniformly mixing the three may be hardly achievable. However, when the acrylate-based non-graft polymer is in a liquid state, the virgin diene-based graft polymer and the acrylate-based non-graft polymer may be mixed to form a dough-like mixture, which may be evenly distributed between the recycled resin and the virgin vinyl-based non-graft polymer, and accordingly, a thermoplastic resin composition in which all components are uniformly mixed may be prepared. This may minimize property deviations over the time point of production in the thermoplastic resin composition, and enhance processability.

The additive may further include an olefin-based non-graft polymer. In addition, since the descriptions of the base resin and the additive are identical to those provided in the section on 'Thermoplastic resin composition', detailed descriptions will not be provided hereafter.

Hereinafter, examples of the present invention will be described in detail in such a manner that it may easily be performed by a person skilled in the art to which the present invention pertains. The present invention may, however, be embodied in many different forms, and is not limited to examples set forth herein.

### Examples and Comparative Examples

Specifications of components used in the following Examples and Comparative Examples are as follows.
1) Recycled resin: Recycled resin including 15.0 wt% of butadiene rubber polymer, 21.0 wt% of acrylonitrile unit, and 64.0 wt% of styrene unit
2) Virgin diene-based graft polymer: ABS graft polymer including 60.0 wt% of butadiene rubber polymer having an average particle size of 300 nm and a shell including 30.0 wt% of styrene unit grafted onto butadiene rubber polymer and 10.0 wt% of acrylonitrile unit (graft ratio: 33.0 wt%, weight average molecular weight of shell: 75,000 g/mol)
3) Virgin vinyl-based non-graft polymer: Styrene/acrylonitrile non-graft polymer including 73.0 wt% of styrene unit and 27 wt% of acrylonitrile unit (weight average molecular weight: 130,000 g/mol)
4) Additive 1: Polybutylacrylate in a liquid state and having a weight average molecular weight of 1,800 g/mol
5) Additive 2: PMA, molecular weight: 40,000 g/mol (Merck)
6) Additive 3: PMMA, molecular weight: 15,000 g/mol (Merck)
7) Additive 4: ASA DP (LG Chemical, product name: SA927)

The components described above were mixed and stirred as described in Tables 1 and 2 below to prepare a thermoplastic resin composition.

### Experimental Example 1_Initial Production Phase

10 kg of the thermoplastic resin compositions of Examples and Comparative Examples were placed in a twin-screw extruder set at 230 °C and extruded to prepare pellets. 1 kg of the initially prepared pellets were injection molded to prepare samples, and physical properties were measured using the following methods, and the results are shown in Tables 1 and 2 below.
1) Melt Flow Index (g/10 min): The melt flow index of the pellets was measured under the conditions of 220 °C and 10 kg in accordance with ASTM D-1238. When the melt flow index was 18.0 g/10 min or greater, it was determined that processability was excellent.
2) Impact strength 1 (kg ·cm/cm, 1/4 In): The notched Izod impact strength was measured at 25 °C in accordance with ASTM D265. When the notched Izod impact strength was 20.0 kg· cm/cm or greater, it was determined that impact resistance was excellent.
3) Impact strength 2 (kg ·cm/cm, 1/8 In): The notched Izod impact strength was measured at 25 °C in accordance with ASTM D265. When the notched Izod impact strength was 40.0 kg · cm/cm or greater, it was determined that impact resistance was excellent.

### Experimental Example 2_Late Production Phase

10 kg of the thermoplastic resin compositions of Examples and Comparative Examples were placed in a twin-screw extruder set at 230 °C and extruded to prepare pellets. 9 kg of pellets were prepared, and then 1 kg of the last prepared pellets were injection molded to prepare samples, and physical properties were measured using the following methods, and the results are shown in Tables 1 and 2 below.
1) Melt Flow Index (g/10 min): The melt flow index of the pellets was measured under the conditions of 220 °C and 10 kg in accordance with ASTM D-1238. When the melt flow index was 18.0 g/10 min or greater, it was determined that processability was excellent.
2) Impact strength 1 (kg·cm/cm, 1/4 In): The notched Izod impact strength was measured at 25 °C in accordance with ASTM D265. When the notched Izod impact strength was 20.0 kg· cm/cm or greater, it was determined that impact resistance was excellent.
3) Impact strength 2 (kg·cm/cm, 1/8 In): The notched Izod impact strength was measured at 25 °C in accordance with ASTM D265. When the notched Izod impact strength was 40.0 kg· cm/cm or greater, it was determined that impact resistance was excellent.

### Experimental Example 3

The thermoplastic resin compositions of Examples and Comparative Examples were placed in a twin-screw extruder set at 230 °C and extruded to prepare pellets. The pellets were injection molded to prepare samples, and after 1 hour, physical properties were measured using the following methods, and the results are shown in Tables 1 and 2 below.
1) Appearance quality: Curved injection molded samples were scratched with a knife and folded, and the state of the folded surface was visually evaluated.
   ○: No delamination
   △: When additional force was applied after scratching and folding the injection molded samples with a knife, delamination occurred at the folded surface, and two different types of delamination were observed at the folded surface.
   X: After scratching and folding the injection molded samples with a knife, delamination occurred at the folded surface even without applying additional force, and two different types of delamination were observed at the folded surface.

### Experimental Example 4

10 mg of samples were collected from the thermoplastic resin compositions prepared in Examples 1 to 3 and Comparative Examples 1 to 6, dissolved in C₂D₂Cl₄, a solvent for NMR measurement, and an area A of a first peak observed in a range of 3.95 ppm to 4.15 ppm, an area B of a second peak observed in a range of 0.91 ppm to 1.03 ppm, and an area C of a third peak observed in a range of 6.4 ppm to 7.5 ppm were calculated using NMR-BH600 from Bruker, and the results are shown in Tables 1 and 2 below.

**[Table 1]**

| Item | | Examples | | |
|---|---|---|---|---|
| | | 1 | 2 | 3 |
| Base resin | Recycled resin (by weight) | 34 | 34 | 34 |
| | Virgin diene-based graft polymer (by weight) | 25 | 25 | 25 |
| | Virgin vinyl-based non-graft polymer (by weight) | 41 | 41 | 41 |
| Additive 1 (by weight) | | 0.2 | 0.6 | 1 |
| Properties of initial production phase | Melt flow index (g/10 min) | 22 | 24 | 27 |
| | Impact strength 1 (kg·cm/cm) | 28 | 27 | 29 |
| | Impact strength 2 (kg·cm/cm) | 43 | 44 | 47 |
| Properties of | Melt flow index (g/10 min) | 21 | 23 | 26 |
| late production phase | Impact strength 1 (kg·cm/cm) | 27 | 27 | 28 |
| | Impact strength 2 (kg·cm/cm) | 42 | 42 | 44 |
| Peak area | 1st peak area (A) | 0.17 | 0.27 | 0.52 |
| | 2nd peak area (B) | 0.39 | 0.50 | 0.69 |
| | 3rd peak area (C) | 50 | 50 | 50 |
| Peak area ratio ((A+B)/C) | | 0.0112 | 0.015 | 0.0242 |
| Appearance quality | | ○ | ○ | ○ |

**[Table 2]**

| Item | | Comparative Examples | | | | | |
|---|---|---|---|---|---|---|---|
| | | 1 | 2 | 3 | 4 | 5 | 6 |
| Base resin | Recycled resin (by weight) | 34 | 34 | 34 | 10 | 34 | 34 |
| | Virgin diene-based graft polymer (by weight) | 25 | 25 | 5 | 5 | 25 | 25 |
| | Virgin vinyl-based non-graft polymer (by weight) | 41 | 41 | 41 | 45 | 41 | 41 |
| Additive 1 (by weight) | | - | 1.5 | - | - | - | - |
| Additive 2 (by weight) | | - | - | - | - | 1 | - |
| Additive 3 (by weight) | | - | - | - | - | - | 1 |
| Additive 4 (by weight) | | - | - | 20 | 40 | - | - |
| Properties of initial production phase | Melt flow index (g/10 min) | 17 | 16 | 21 | 15 | 18 | 17 |
| | Impact strength 1 (kg·cm/cm) | 26 | 27 | 15 | 26 | 25 | 23 |
| | Impact strength 2 (kg·cm/cm) | 42 | 43 | 31 | 40 | 42 | 39 |
| Properti es of late producti on phase | Melt flow index (g/10 min) | 24 | 26 | 26 | 22 | 23 | 21 |
| | Impact strength 1 (kg·cm/cm) | 19 | 18 | 12 | 22 | 20 | 17 |
| | Impact strength 2 (kg·cm/cm) | 37 | 36 | 26 | 29 | 36 | 31 |
| Peak area | 1st peak area (A) | 0.14 | 0.68 | 2.61 | 5.07 | - | - |
| | 2nd peak area (B) | 0.36 | 0.98 | 3.74 | 7.65 | - | - |
| | 3rd peak area (C) | 50 | 50 | 50 | 50 | 50 | 50 |
| Peak area ratio ((A+B)/C) | | 0.01 | 0.0332 | 0.127 | 0.2544 | - | - |
| Appearance quality | | ○ | ○ | ○ | ○ | ○ | ○ |

Referring to Table 1, Examples 1 to 3 satisfying Mathematical Equation 1 above exhibited excellent melt flow index, impact strength, and appearance properties for the thermoplastic resin composition prepared at both the beginning and end of production. In addition, it was determined that Examples 1 to 3 exhibited slightly lower impact strength at the end of production than at the beginning of production, but the impact strength was still at an excellent level.

Referring to Table 2, it was determined that Comparative Examples 1 to 6 not satisfying Mathematical Equation 1 above had greater deviations in physical properties between the beginning of production and the end of production than Examples 1 to 3, and in particular, it was determined that the impact strength at the end of production was not at an excellent level.

## Claims

1. A thermoplastic resin composition comprising a base resin comprising a recycled resin, a virgin diene-based graft polymer, and a virgin vinyl-based non-graft polymer; and an additive, and satisfying Mathematical Equation 1 below: $0.011 \leq \frac{A + B}{C} \leq 0.032$
wherein in Mathematical Equation 1 above,
A indicates an area (integration) of a peak observed in a range of 3.95 ppm to 4.15 ppm in ¹H-NMR of the thermoplastic resin composition,
B indicates an area (integration) of a peak observed in a range of 0.91 ppm to 1.03 ppm in ¹H-NMR of the thermoplastic resin composition, and
C indicates an area (integration) of a peak observed in a range of 6.4 ppm to 7.5 ppm in ¹H-NMR of the thermoplastic resin composition.

2. The thermoplastic resin composition of claim 1, wherein the additive is an acrylate-based non-graft polymer.

3. The thermoplastic resin composition of claim 2, wherein the acrylate-based non-graft polymer has a weight average molecular weight of 1,000 g/mol to 5,000 g/mol.

4. The thermoplastic resin composition of claim 2, wherein the acrylate-based non-graft polymer is an acrylate-based homopolymer.

5. The thermoplastic resin composition of claim 2, wherein the acrylate-based non-graft polymer comprises at least one of polymethyl acrylate, polyethyl acrylate, and polybutyl acrylate.

6. The thermoplastic resin composition of claim 2, wherein with respect to 100 parts by weight of the base resin, the acrylate-based non-graft polymer is provided in an amount of 0.10 parts by weight to 1.00 part by weight.

7. The thermoplastic resin composition of claim 1, wherein the recycled resin comprises at least one selected from the group consisting of recycled polyethylene, recycled polypropylene, recycled polyester, recycled polystyrene, recycled polyamide, recycled polycarbonate, recycled diene-based graft polymer, and recycled vinyl-based non-graft polymer.

8. The thermoplastic resin composition of claim 1, wherein the virgin diene-based graft polymer comprises a diene-based rubber polymer; and a shell comprising a vinyl cyanide-based monomer unit and a vinyl aromatic monomer unit grafted onto the diene-based rubber polymer.

9. The thermoplastic resin composition of claim 1, wherein the virgin vinyl-based non-graft polymer comprises a vinyl cyanide-based monomer unit and a vinyl aromatic monomer unit.

10. The thermoplastic resin composition of claim 1, wherein with respect to 100 parts by weight of the base resin,
the recycled resin is provided in an amount of 10 parts by weight to 95 parts by weight,
the virgin diene-based graft polymer is provided in an amount of 5 parts by weight to 30 parts by weight, and
the virgin vinyl-based non-graft polymer is provided in an amount of 1 part by weight to 60 parts by weight.
